# EUROPEAN PATENT APPLICATION

(11) **EP 1 830 311 A2**
(43) Date of publication of application: **05.09.2007**
(21) Application number: 07250869.0
(22) Date of filing: 01.03.2007
(51) Int. Cl.: G06K 19/077

(54) **IC tag sheet**

(30) Priority: 01.03.2006 JP 2006055357
(71) Applicant: Nippon Sheet Glass Co., Ltd., Minato-ku, Tokyo 108-6321 (JP)
(72) Inventor: Kokuryo, Kazuto c/o Zenic Inc., Shiga 520-2144 (JP)
(74) Representative: Neath, Susannah Mairi

(57) **Abstract**

An IC tag sheet includes a base sheet (1), a plurality of stick members (2) arranged in parallel on the base sheet, and an IC tag (6) placed in at least one of the stick members (2), where the longitudinal direction of the IC tag (6) corresponds to the longitudinal direction of the stick members (2). It is preferable that the IC tag sheet has a joint (3) formed of upper ridges (14) formed on an upper joint (12) and lower ridges (13) formed on a lower joint (11). Even when the IC tag sheet is bent in a predetermined direction, problems such as breakage in the IC tag and degradation in the communication property are prevented substantially

## Description

The present invention relates to an IC tag sheet including an IC tag.

Recently, barcodes and IC tags have been used from the viewpoint of information management such as product traceability of and calculation of fares/fees. Currently, barcodes have become the mainstream of information management of products. Abarcode, which is printed on a product or the package, can be provided at a low cost. However, the barcode can contain only a small amount of information, and thus it cannot serve for detailed management of the product.

An IC tag can store much information in comparison with a barcode, and thus an IC tag serves to provide a more detailed management of a product. Moreover, since such an IC tag can be fed with energy from a reader, it does not require a battery. Furthermore, the IC tag is more preferable to the barcode in view of management for maintenance, since the IC tag allows reading of information even if stains or dust are present. In addition, the IC tag can be used repeatedly since information in the IC tag can be added or changed. With the recent tendency toward reduction of the unit price of the IC tag, demand for the IC tag has been increased rapidly.

FIG. 17 is a plan view schematically showing a configuration of a typical IC tag (see JP2000-222540 A for example). A chip module 201 stores information from an exterior apparatus at the time of writing and outputs the thus stored information at the time of reading. An antenna module 202 transmits/receives information with an exterior apparatus (reader) through radio transmission. When the antenna module 202 is a dipole antenna, its length is determined (1/2 wavelength in general) depending on the frequency of the electromagnetic wave for transmission/reception with the exterior apparatus. For example, when the frequency is 2.45 GHz, the 1/2 wavelength is 61 mm. The chip module 201 and the antenna module 202 are formed independently and joined to each other by using a joining technique.

The antenna module 202 of the IC tag is as long as 61 mm as mentioned above. In a case of using a coil antenna for the antenna module 202, the coil is formed in a region of 18 mm x 32 mm for example, and thus it will require a large area. Such an IC tag will be broken or deformed easily due to bending, particularly at the joint between the chip module 201 and the antenna module 202 and also at the antenna module 202, causing degradation in the communication property. Typically therefore, the IC tag is formed in a plastic card or in a label to be bonded to a solid material.

For linear products such as wires and fishing rods having simple shapes, it will be difficult to decide visually the specifications such as the type and the length. For a wire configured by connecting plural kinds of wires, even for a general-purpose wire, the properties will change depending on the connection of the wires, and the properties will change further when there are any change in the connection of the wires. It is difficult to manage such a wire with an unrewritable tag like a barcode.

An IC tag is rewritable but susceptible to bending, and thus it is difficult to wind the IC tag around a wire and to manage the wire. When the strength of the IC tag against bending is improved for the use/purpose, the cost will be increased.

Therefore, with the foregoing in mind, it is an object of the present invention to avoid the above-mentioned problems by providing an IC tag sheet resistant to breakage of the IC tag and degradation in the communication property even when the IC tag sheet is bent in a predetermined direction.

For achieving the object, a first IC tag of the present invention includes a base sheet, a plurality of stick members arranged in parallel on the base sheet, and an IC tag placed in at least one of the stick members. The longitudinal direction of the IC tag corresponds to the longitudinal direction of the stick members.

A second IC tag sheet of the present invention includes a base sheet, a plurality of stick members arranged in parallel on the surface of the base sheet, and an IC tag placed on or in the base sheet. The longitudinal direction of the IC tag corresponds to the longitudinal direction of the stick members.

A third IC tag sheet of the present invention includes a plurality of stick members arranged in the short direction, binding members for binding the stick members, and an IC tag placed in at least one of the stick members. The longitudinal direction of the IC tag corresponds to the longitudinal direction of the stick members.
FIG. 1 is a perspective view showing a configuration of an IC tag sheet according to Embodiment 1 of the present invention.
FIG. 2Ais a perspective view showing a configuration of a stick of the IC tag sheet.
FIG. 2B is a perspective view showing another configuration of a stick of the IC tag sheet.
FIG. 3 is a cross-sectional view showing a configuration of a joint of the IC tag sheet.
FIG. 4 is a cross-sectional view showing another configuration of a joint of the IC tag sheet.
FIG. 5 is a cross-sectional view showing another configuration of a joint of the IC tag sheet.
FIG. 6 is a perspective view showing an IC tag sheet wound around wires, according to Embodiment 1 of the present invention.
FIG. 7 is an exploded perspective view showing another configuration of the IC tag sheet according to Embodiment 1 of the present invention.
FIG. 8 is an exploded perspective view showing another configuration of the IC tag sheet.
FIG. 9 is a perspective view showing a configuration of an IC tag sheet according to Embodiment 2 of the present invention.
FIG. 10 is a perspective view showing a configuration of a suction sheet of the IC tag sheet.
FIG. 11 is an exploded perspective view showing a configuration of the IC tag sheet.
FIG. 12A is a perspective view showing the IC tag sheet wound around a bundle of wires.
FIG. 12B is a cross-sectional view of the IC tag sheet and the wires shown in FIG. 12A.
FIG. 13 is an exploded perspective view showing an IC tag plate to be attached to a joint of the IC tag sheet.
FIG. 14 is a perspective view showing another configuration of the IC tag sheet.
FIG. 15 is a perspective view showing a configuration of an IC tag sheet according to Embodiment 3 of the present invention.
FIG. 16 is a perspective view showing another configuration of a joint of an IC tag sheet according to Embodiment 3 of the present invention.
FIG. 17 is a plan view showing a configuration of a typical IC tag sheet.

In an IC tag sheet of the present invention, the stick members can have Young's modulus higher than that of the base sheet. Accordingly, the IC tag sheet will be unbendable in the longitudinal direction but bendable in the short direction of the stick members.

Furthermore, the IC tag sheet can have joints at the both edges to be joined with each other. Accordingly, the IC tag sheet can be wound around an attachment object.

Alternatively, the IC tag sheet can have a suction member on a surface of the base sheet opposite to the surface where the stick members are arranged. Accordingly, the IC tag sheet can be joined to the attachment object and fixed.

Alternatively, the IC tag can be placed between the base sheet and the suction member. Accordingly, the IC tag sheet will not be bent in the longitudinal direction of the IC tag, and thus breakage and degradation in property of the IC tag can be prevented.

The suction member can be formed as a suction sheet. Accordingly, the suction member can be formed easily on the base sheet.

Hereinafter, embodiments of the IC tag sheet of the present invention will be described below with reference to attached figures.

### (Embodiment 1)

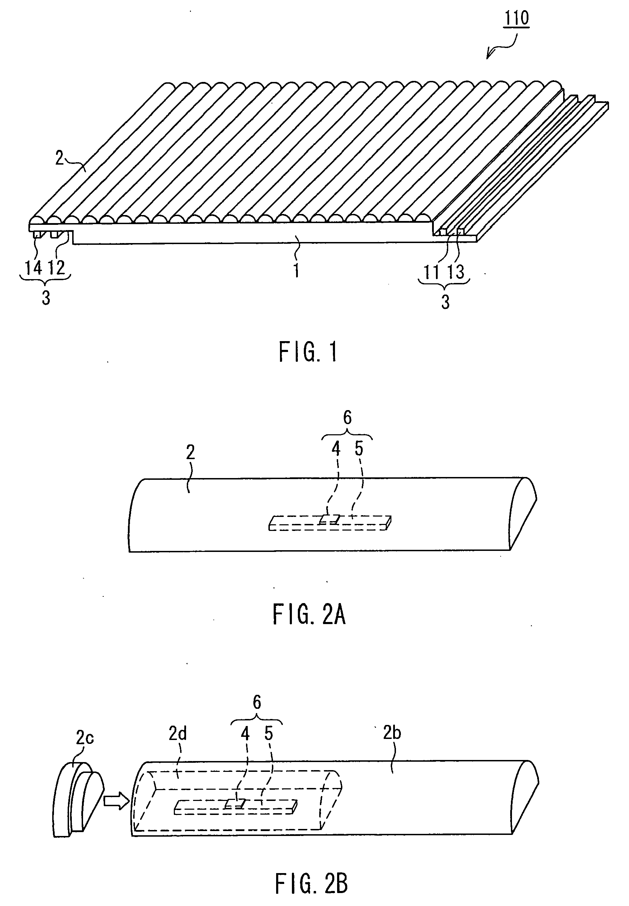

FIG. 1 is a perspective view showing an exemplary configuration of an IC tag sheet 110 according to Embodiment 1 of the present invention. A base sheet 1 is made of a flexible resin or the like. On the base sheet 1, a plurality of sticks 2 (stick members) are arranged in parallel. An IC tag (not shown) is sealed in at least one of the thus arranged sticks 2. Joints 3 are formed at the both edges of the base sheet 1. The joints 3 are joined with each other so that the IC tag sheet can be wound around an attachment object (not shown) and fixed.

Hereinafter, respective components will be described more in detail. First, sticks 2 will be described below. It is preferable that the sticks 2 are made of a material having Young's modulus higher than that of the base sheet 1. Since the sticks 2 are arranged in parallel on the base sheet 1, the IC tag sheet 110 cannot be bent in the longitudinal direction (unbendable direction) but it can be bent in the short direction (bendable direction) of the sticks 2. It is also preferable that the number of the sticks 2 to be arranged on the IC tag sheet 110 is determined to prevent deformation of the IC tag against the maximum force applied in the unbendable direction.

The cross section of the stick 2 is not limited to the semicircle as shown in FIG. 1, but it can be a circle, a rectangle, an ellipse, a polygon or the like in accordance with the use. It is also possible to arrange the sticks 2 with suitable spacing between them on the base sheet 1. Accordingly, adjacent sticks 2 will not snag each other when the IC tag sheet 110 is bent due to a force applied in the bendable direction. It is also possible to coat the sticks 2 with a resin so as to provide a flat surface.

Next description is about the positional relationship between the IC tag and the sticks 2. FIG. 2Ais a perspective view showing a configuration of a stick 2 including the IC tag, which is arranged on the IC tag sheet 110 according to this embodiment. The IC tag 6 has a chip module 4 and an antenna module 5. The antenna module 5 is a dipole antenna. The IC tag 6 is sealed in the stick 2 and placed so that the longitudinal direction of the antenna module 5 corresponds to the longitudinal direction (unbendable direction) of the stick 2. Accordingly, the IC tag sheet 110 cannot be bent in the longitudinal direction of the antenna module 5 but can be bent in the short direction (bendable direction). Therefore, breakage, or more specifically cutting (disconnection) or deformation at the joint between the antenna module 5 and the chip module 4 and also at the antenna module 5 can be prevented, since the IC tag 6 itself will not be bent. Alternatively, an IC tag 6 including a coil antenna or the like can be used as long as the IC tag 6 can be inserted in the stick 2.

The IC tag 6 can be included in the stick 2 in an alternative manner. FIG. 2B is a perspective view showing a variation of the stick 2 that includes the IC tag 6 and that is placed on the IC tag sheet 110 according to this embodiment. In a stick 2b, a hollow 2d for accepting the IC tag 6 is formed and a cap 2c is provided at the edge of the stick 2 so that the IC tag 6 can be taken out. Preferably the hollow 2d is shaped in accordance with the shape of the IC tag 6 so as to prevent breakage of the IC tag 6. Accordingly, the IC tag 6 can be reused.

As mentioned above, according to the configuration of sealing the IC tag 6 in the stick 2, the IC tag 6 can be prevented from damage caused by not only warping of an attachment object and damage in use, but also damage caused by stains and impacts.

The following description is about the joints 3. At one edge of the IC tag sheet 110 in FIG. 1, the upper face of the base sheet 1 is trimmed to form a lower joint 11. At the other edge, the lower face of the base sheet 1 is trimmed to form an upper joint 12. At the lower joint 11, two lower ridges 13 are formed in the longitudinal direction of the sticks 2. Furthermore, in the longitudinal direction of the sticks 2, two upper ridges 14 are formed at the upper joint 12 so as to fit with the lower ridges 13, thereby a zipper of a dual structure is provided with these lower ridges 13 and the upper ridges 14.

Accordingly, the IC tag sheet 110 can be wound around the attachment object.

It is also possible to connect plural IC tag sheets 110 at the respective joints 3 and wind them around a large attachment object.

It is also possible that respectively more than two lower ridges 13 and upper ridges 14 are provided. Accordingly, it is possible to improve the joining strength or adjust the winding length in accordance with the size of the attachment object.

It is also possible to replace the zipper composed of the lower joint 11 and the upper joint 12 by a pair of hook- and-loop fasteners. Accordingly, the winding length can be adjusted in accordance with the size of the attachment object.

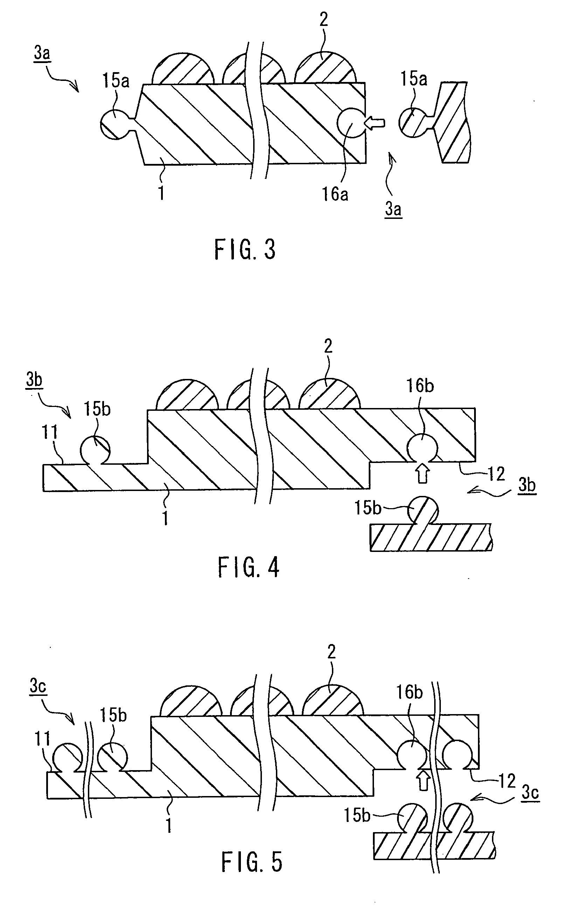

FIG. 3 is a cross-sectional view showing a configuration of a joint 3a as a variation of the joint 3 in the IC tag sheet 110 according to this embodiment. The joint 3a is composed of a spherical protrusion 15a formed on one edge and a spherical recess 16a formed on the other edge of the base sheet 1. The IC tag sheet 110 is wound around the attachment object by fitting the protrusion 15a and the recess 16a.

FIG. 4 is a cross-sectional view showing a configuration of a joint 3b as a variation of the joint 3 in the IC tag sheet 110 according to this embodiment. The joint 3b is composed of a spherical protrusion 15b formed on the lower joint 11 and a spherical recess 16b formed on the upper joint 12. The IC tag sheet 110 is wound around the attachment object by fitting the protrusion 15b and the recess 16b.

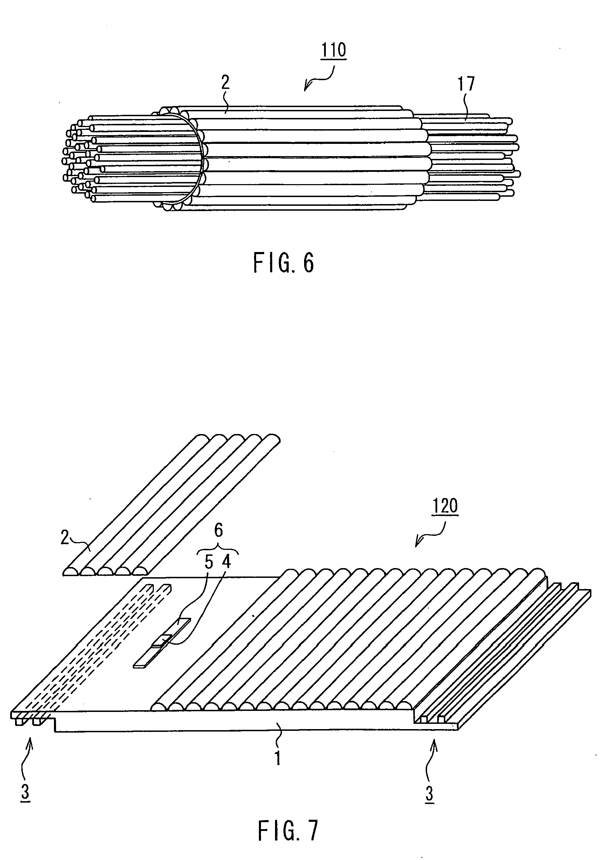

FIG. 5 is a cross-sectional view showing a configuration of a joint 3c composed of plural protrusions 15b and recesses 16b of the joint 3b as shown in FIG. 4. The IC tag sheet 110 is attached to the attachment object by fitting the protrusions 15b and the recesses 16b. The length of this IC tag sheet 110 in the attachment can be adjusted by shifting the fitting position of the protrusions 15b and the recesses 16b.

FIG. 6 is a perspective view showing the IC tag sheet 110 according to this embodiment, which is attached to wires 17 as an attachment object. The IC tag sheet 110 is bent in the bendable direction so as to tie the wires 17. Properties of the wires 17 such as resistance, materials, length and diameter are recorded on the IC tag 6 of the IC tag sheet 110, and the recorded information can be read out by a reader. Accordingly, the properties of the wires 17 can be checked easily.

As mentioned above, the IC tag sheet 110 according to this embodiment can be bent only in a predetermined direction (bendable direction), thereby preventing deformation and cutting of the IC tag 6 caused by bending.

As shown in FIG. 7, an IC tag 6 for an IC tag sheet 120 can be formed not in a stick 2 but on the base sheet 1. Though some of the sticks 2 are separated from the base sheet 1 in FIG. 7 in order to show the IC tag 6, actually the base sheet 1 and the sticks 2 are bonded to each other. In this case, since the longitudinal direction of the sticks 2 and the longitudinal direction of the IC tag 6 correspond to each other in the arrangement, the IC tag 6 will not be bent in the longitudinal direction. Therefore, breakage, cutting and degradation in the properties of the IC tag 6 can be prevented.

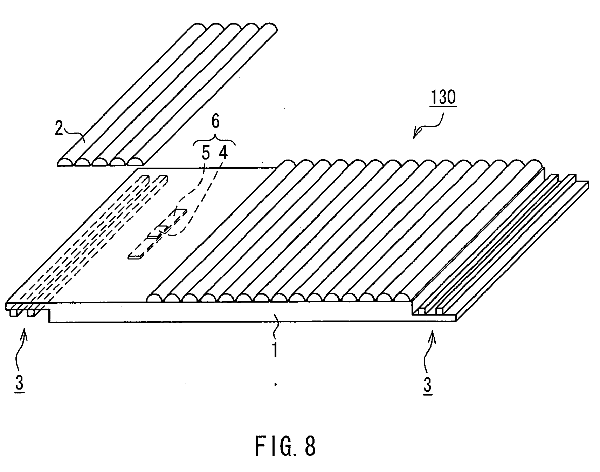

As shown in an IC tag 130 as shown in FIG. 8, an IC tag 6 can be formed not in the stick 2 but in the base sheet 1. In FIG. 8, some sticks 2 are shown in a state separated from the base sheet 1 just like in FIG. 7 in order to show the IC tag 6. Actually, the base sheet 1 and the sticks 2 are bonded to each other. In this case, since the longitudinal direction of the sticks 2 and the longitudinal direction of the IC tag 6 correspond to each other, the IC tag 6 will not be bent in the longitudinal direction. Therefore, breakage, cutting and degradation in the properties of the IC tag 6 can be prevented.

### (Embodiment 2)

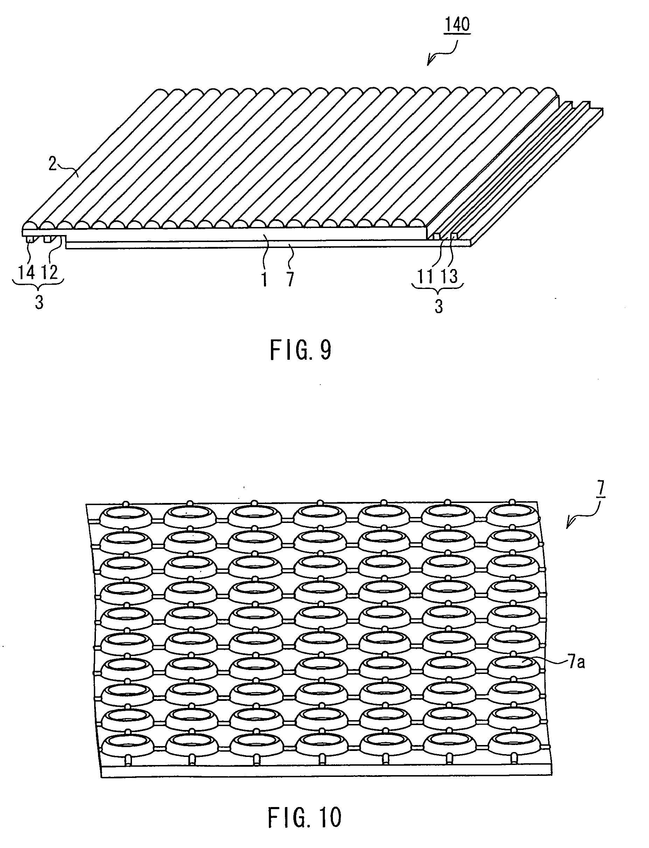

FIG. 9 is a perspective view showing a configuration of an IC tag sheet 140 according to Embodiment 2 of the present invention. The IC tag sheet 140 according to this embodiment has a suction sheet 7 formed on a surface of the base sheet 1 of the IC tag sheet 110 according to Embodiment 1, opposite to the surface where the sticks 2 are formed. In the IC tag sheet 140 in this embodiment, components identical to those of the IC tag sheet 110 in Embodiment 1 will be assigned with the identical numerals and the explanation will be omitted.

One surface of the suction sheet 7 is adhered to the base sheet 1, and suction discs (suction member) are placed on the opposite surface. FIG. 10 is a perspective view showing a configuration of a surface of the suction sheet 7 where the suction discs 7a are arranged. Each of the suction discs 7a is 5 mm in diameter and 50 µm in height. The suction sheet 7 is formed by printing a flexible suction ink on a sheet made of polyolefin-based synthetic resin, a polyester resin, polyvinyl chloride resin or the like, by using a screen printing method or the like. Therefore, the shape and size of the suction discs can be set arbitrarily. The IC tag sheet 140 can be fixed by joining the suction discs to the attachment object. Since the IC tag sheet 140 using the suction sheet 7 does not require either an adhesive or any mechanism for hooking or entangling, the attachment object will not be damaged.

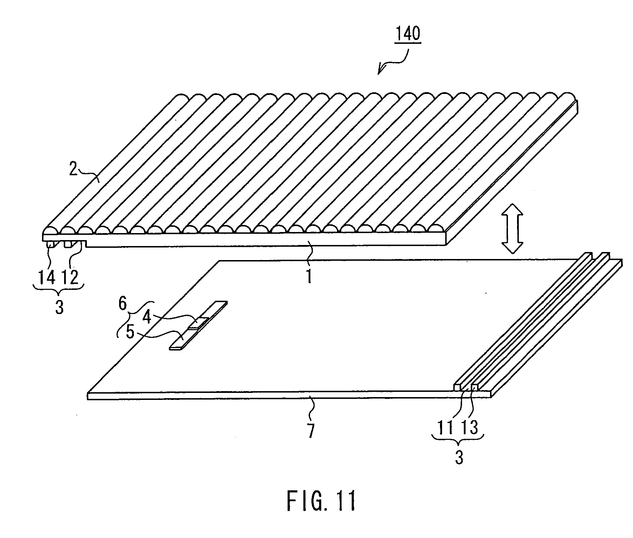

The IC tag 6 can be formed in the stick 2. Alternatively, the IC tag 6 can be placed between the base sheet 1 and the suction sheet 7. FIG. 11 is an exploded perspective view showing a configuration of the IC tag sheet 140 formed by bonding the base sheet 1 and the suction sheet 7. In the step of bonding the base sheet 1 and the suction sheet 7 for forming the IC tag sheet 140, the IC tag 6 is placed at a predetermined position on the suction sheet 7.

The IC tag 6 is placed so that the longitudinal direction corresponds to the longitudinal direction of the sticks 2. Accordingly, damage of the IC tag 6 caused by bending of the IC tag sheet 140 can be prevented. This configuration serves also to protect the IC tag 6 from damage in use or damage caused by stains, impact or the like. In addition to that, since a step of sealing the IC tag 6 in the stick 2 or the base 1 is not required, the IC tag sheet 140 can be manufactured at low cost.

As shown in FIG. 11, it is also possible to form the lower joint 11 of the joint 3 in FIG. 1, 4 or 5 on the suction sheet 7 opposite to the surface where the suction discs are formed, while the upper joint 12 is formed on the back face of the base sheet 1. Alternatively, the joint 3a as shown in FIG. 3 can be integrated with the suction sheet 7.

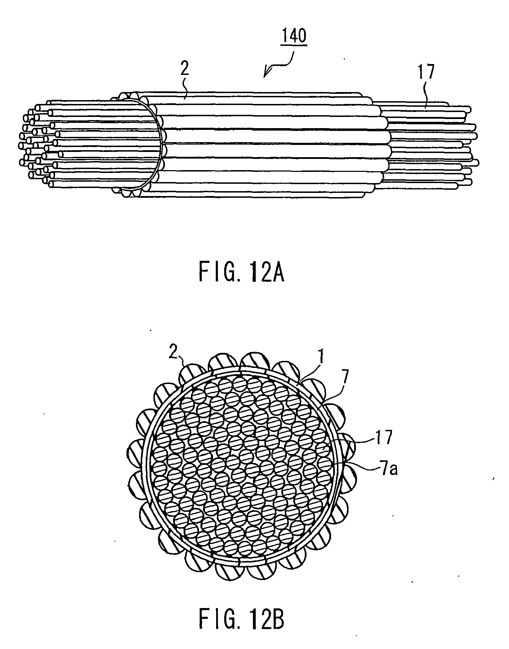

FIG. 12A is a perspective view showing the IC tag sheet 140 according to this embodiment attached to wires 17, and FIG. 12B is the cross-sectional view. When the IC tag sheet 140 is attached to the wires 17, the suction discs 7a of the suction sheet 7 are joined to the wires 17 so as to fix the IC tag sheet 140 to the wires 17. Since the suction discs 7a are formed by a screen printing method or the like as mentioned above, small suction discs 7a having a diameter of several millimeters can be formed. Therefore, even when the attachment object includes a plurality of wires 17 with small radii, the suction discs 7a can be joined to the surfaces of the wires 17 so as to fix the IC tag sheet 140.

When the attachment object includes plural wires 17 or the like, even a suction disc 7a not joined to the attachment object provides an effect of securing the wires with their surface asperities.

Application of the IC tag sheet 140 according to this embodiment is not limited to winding around an attachment object to be fixed. Such an IC tag sheet 140 can be bonded in use to a soft member of polypropylene or the like, or to a solid matter having a cylindrical surface such as a cylinder side. Since the bending direction of the IC tag sheet 140 is restricted by the sticks 2, breakage in the IC tag 6 can be prevented even if the IC tag sheet 140 is bonded to a soft member. In this application, a joint 3 is not required.

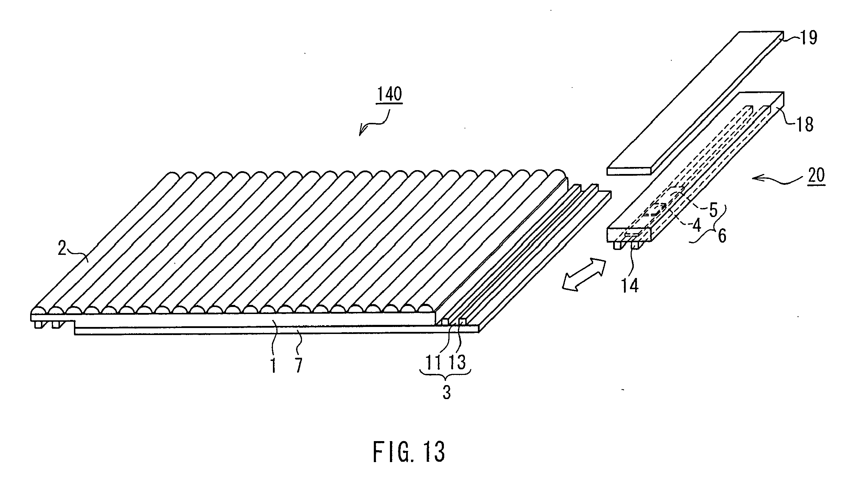

Alternatively in this embodiment, an IC tag plate including the IC tag 6 can be attached to the lower ridges 13 forming a zipper. FIG. 13 is an exploded perspective view showing a configuration of an IC tag plate 20 that can be placed on the joint 3. The IC tag 6 is placed in a sealing resin 18 of the substantially same material as the base sheet 1. The sealing resin 18 is formed to be rectangular. On one surface of the sealing resin 18, a plate 19 made of a material having Young's modulus of the substantially same level as the sticks 2 is disposed. Upper ridges 14 are formed on the face opposite to plate 19 in order to fit with the lower ridges 13 of the joint 3.

The plate 19 can be replaced by the sticks 2. The IC tag 6 can be placed or not on the IC tag sheet 140 on which the IC tag plate 20 will be placed.

It is also possible that a hook-and-loop fastener or a suction surface is formed on the surface of the IC tag plate 20 where the upper ridges 14 are formed, in accordance with the lower joint 11 to be joined. In a case where such an IC tag plate 20 is applied, the IC tag can be exchanged easily, and thus IC tags can be used properly in light of the properties such as capacity and transmission distance.

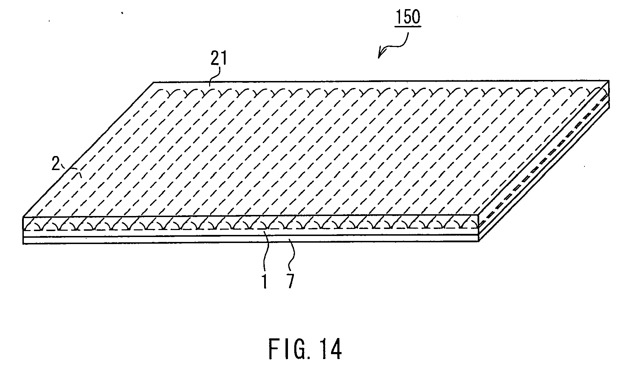

FIG. 14 is a perspective view showing a configuration of an IC tag sheet 150 as a variation of the IC tag sheet 140 to be wound around an attachment object so as to be fixed in use. The IC tag sheet 150 will be fixed to the attachment object via the suction discs of the suction sheet 7 joined to the surface of the base sheet 1. In this case, the suction disc diameter can be decreased in accordance with the shape of the sticks 2 so as to be joined to the sticks 2. However, the adsorption area is reduced and thus degrades the bonding strength. In order to increase the adsorption area, the IC tag sheet 150 is configured by covering the sticks 2 on the base sheet 1 with a covering member 21 made of a resin or the like, containing the sticks 2 in the base sheet 1 so as to provide a flat surface. This configuration serves to facilitate winding and detachment, and also allows a repeated attachment. Furthermore, since the suction discs are joined to the surface, the winding length can be adjusted according to the size of the attachment object.

As mentioned above, the IC tag sheets 140 and 150 according to this embodiment can be bent only in a predetermined direction, and thus deformation and cutting of the IC tag 6 caused by bending can be prevented.

The size and shape of the suction discs 7a of the suction sheet 7 are not limited to those as shown in FIG. 10, but they can be shaped rectangular or polygonal.

### (Embodiment 3)

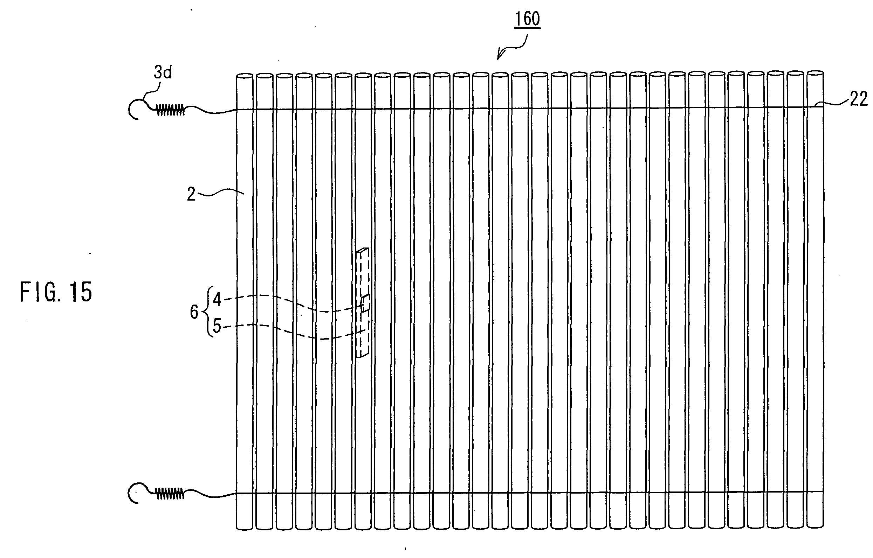

FIG. 15 is a perspective view showing a configuration of an IC tag sheet 160 according to Embodiment 3 of the present invention. The IC tag sheet 160 according to this embodiment is configured by binding the sticks 2 to form a roller screen, without using the base sheet 1 of the IC tag sheet 110 according to Embodiment 1. In the IC tag sheet 160 according to this embodiment, components identical to those of the IC tag sheet 110 according to Embodiment 1 will be assigned with the identical numerals and the explanation will be omitted.

The IC tag sheet 160 is formed of cylindrical sticks 2 arranged in the short direction, and an IC tag 6 is included in at least one of the sticks 2. The sticks 2 are tied and bound with fibrous binding members 22. As a result, the IC tag sheet 160 is formed to be bendable in the short direction, but unbendable in the longitudinal direction of the sticks 2. That is, the IC tag sheet 160 cannot be bent in the longitudinal direction of the antenna module 5 but it can be bent in the short direction, thereby preventing breakage of the IC tag 6, particularly cutting and deformation at the joints between the antenna module 5 and the chip module 4 and also at the antenna module 5.

The material for the binding members 22 is not limited to fibers to tie the sticks 2, but flexible resins or the like can be used as well so as to adhere the sticks 2 to each other.

Hook-shaped anchors as joints 3d can be provided also to the IC tag sheet 160. By hooking these anchors on a stick 2 at any suitable position, the length of the IC tag sheet 160 can be adjusted in accordance with the size of the attachment object. The joints 3d are not limited to the hook-shape anchors, but for example, a suction member can be used alternatively to be joined to the stick 2.

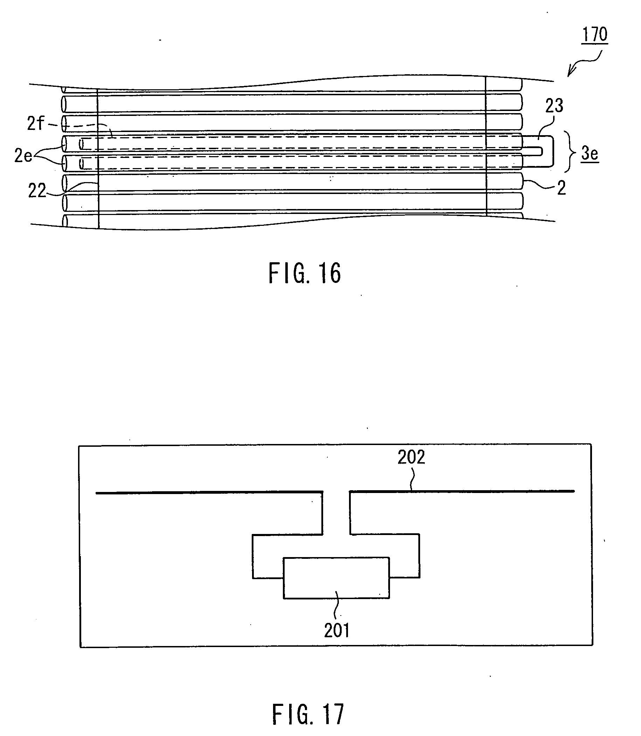

FIG. 16 is a perspective view showing a configuration of a joint 3e as a variation of the joint 3d for an IC tag sheet. The joint 3e in an IC tag sheet 170 is composed of a pair of sticks 2e positioned respectively at the both edges of the IC tag sheet 170 and a U-shaped joint jig 23. The sticks 2e are formed with hollows 2f. The joint jig 23 can be inserted into the hollows 2f. By inserting the joint jig 23 into the hollows 2f of the sticks 2e, the IC tag sheet 170 can be wound around the attachment object easily.

Since the IC tag sheet 160 has no base sheet or cover member, the inner surface to contact with the attachment object is not smooth. This is advantageous in securing plural attachment objects.

Alternatively, a suction member can be attached to the inner surface of the IC tag sheet 160.

As mentioned above, the IC tag sheet 160 according to this embodiment can be bent only in a predetermined direction, and thus deformation and cutting of the IC tag 6 caused by bending can be prevented.

The present invention will not be limited to Embodiments 1-3, especially there is no particular limitation for the number of the sticks 2 as shown in the drawings.

## Claims

1. An IC tag sheet comprising:
a base sheet,
a plurality of stick members arranged in parallel on the base sheet, and
an IC tag placed in at least one of the stick members; and
the longitudinal direction of the IC tag corresponds to the longitudinal direction of the stick members.

2. The IC tag sheet according to claim 1, wherein the stick members have Young's modulus higher than Young's modulus of the base sheet.

3. The IC tag sheet according to claim 1, comprising joints at the edges to be joined with each other.

4. The IC tag sheet according to claim 1, comprising a suction member on the surface of the base sheet opposite to the surface where the stick members are arranged.

5. The IC tag sheet according to claim 4, wherein the IC tag is placed between the base sheet and the suction member.

6. The IC tag sheet according to claim 4, wherein the suction member is a suction sheet.

7. An IC tag sheet comprising:
a base sheet,
a plurality of stick members arranged in parallel on the base sheet, and
an IC tag placed on or in the base sheet; and
the longitudinal direction of the IC tag corresponds to the longitudinal direction of the stick members.

8. The IC tag sheet according to claim 7, wherein the stick members have Young's modulus higher than Young's modulus of the base sheet.

9. The IC tag sheet according to claim 7, comprising joints at the edges to be joined with each other.

10. The IC tag sheet according to claim 7, comprising a suction member on the surface of the base sheet opposite to the surface where the stick members are arranged.

11. The IC tag sheet according to claim 10, wherein the IC tag is placed between the base sheet and the suction member.

12. The IC tag sheet according to claim 10, wherein the suction member is a suction sheet.

13. An IC tag sheet comprising:
a plurality of stick members arranged in the short direction,
a binding member for binding the stick members, and
an IC tag placed in at least one of the stick members; and
the longitudinal direction of the IC tag corresponds to the longitudinal direction of the stick members.

14. The IC tag sheet according to claim 13, comprising joints at the edges to be joined with each other.
